# EUROPEAN PATENT SPECIFICATION

(11) **EP 2 993 041 B1**
(45) Date of publication and mention of the grant of the patent: **12.08.2020**
(21) Application number: 14791264.6
(22) Date of filing: 28.04.2014
(51) Int. Cl.: B32B 27/34, B32B 27/28, B32B 27/36

(54) **HEAT-SHRINKABLE MULTILAYER FILM**
WÄRMESCHRUMPFBARE MEHRSCHICHTFOLIE
FILM MULTICOUCHE THERMORÉTRACTABLE

(30) Priority: 02.05.2013 JP 2013096984
(43) Date of publication of application: 09.03.2016
(73) Proprietor: Kureha Corporation, Tokyo 103-8552 (JP)
(72) Inventor: ITOH, Tadayoshi, Tokyo 103-8552 (JP); SEKIYA, Yuta, Tokyo 103-8552 (JP); TOBITA, Hisanori, Tokyo 103-8552 (JP)
(74) Representative: BRP Renaud & Partner mbB Rechtsanwälte Patentanwälte Steuerberater
(86) International application number: PCT/JP2014/061886
(87) International publication number: WO 2014/178379

(56) References cited:
- EP-A1- 2 116 371
- EP-A2- 0 756 931
- WO-A1-99/55528
- WO-A1-99/55528
- JP-A- H0 796 582
- JP-A- S5 814 744
- JP-A- S56 129 171
- JP-A- 2010 234 718

## Description

### TECHNICAL FIELD

The present invention relates to a heat-shrinkable multilayer film comprising an outer surface layer comprising a heat-resistant thermoplastic resin, an intermediate layer comprising a polyamide-based resin; and an inner surface layer comprising an ethylene-based copolymer and having an excellent balance of self-weldability and easy peelability for providing an excellent appearance to a wrapping excess portion of a shrink-wrapped package.

### BACKGROUND ART

As package processing techniques for foods such as fresh meat, ham, sausages, cheese and other products, techniques in which a heat-shrinkable multilayer film is formed into a bag or pouch by a bag-forming machine and then filled with contents, or the contents are submitted to automatic packaging, either directly or loaded on a tray, during bag-forming processing have been conventionally used. Thus, the characteristics required of such a film for packaging are diverse, and an excellent balance of various characteristics such as heat-shrinkability, strength, heat resistance, high-temperature creep resistance, moldability, suitability for various types of packaging, gas barrier capability, moisture barrier capability, and the like is required. As films suitable for packaging material applications that require strength above all, heat-shrinkable multilayer films containing a polyamide-based resin layer as a primary resin layer have been proposed.

Furthermore, when a meat product of indeterminate form, such as fresh fish or fresh meat or processed meat such as roast pork, beef or chicken, is packaged by being put in a packaging material such as a bag or pouch comprising a multilayer film, it is packaged by vacuum-packaging the meat product and then shrinking the packaged material using hot water having a relatively low temperature of approximately 75 to 95°C, for example. Thus, it is preferable for the packaging material to exhibit good heat-shrinkability and to provide a good appearance by preventing seepage and retention of juice in the excess portion (normally called the "edge") between the contents and the seal portion used for forming a bag or pouch after packaging. To do so, it is desirable for the multilayer film to be suitable for fusing together of the inner surface resin layers of the edge of the bag or pouch filled with contents (called "self-welding" hereinafter) by heating during heat-shrinking. In other words, it is desirable for the inner surface layer of the multilayer film to exhibit "self-weldability." On the other hand, when removing the contents, it is desirable that the edge after the seal portion has been detached can be easily opened by hand, or in other words, that the package has easy peelability. A heat-shrinkable packaging film that well satisfies the requirements of not only self-weldability and easy peelability, but conflicting properties as well, has not been obtained in the past. Needless to say, like conventional food packaging films, such packaging films of meat products also require an excellent balance of various characteristics such as heat-shrinkability, strength, heat resistance, moldability, suitability for various types of packaging, gas barrier capability, and moisture barrier capability, as well as suitability for rapid sealing to enable rapid bag-forming and content filling. Additionally, packaging films for meat products such as fresh or processed meat also require transparency to enable visibility of the contents, gloss to provide a good appearance, and suitability for printing or label adhesion for displaying administrative information such as the location of production, producer, processing date, and processor.

However, the actual situation is that a multilayer film material that satisfies to a high degree the diversity of characteristics required in packaging films for meat products such as fresh and processed meat has not been obtained. For example, Patent Documents 1 to 3 disclose heat-shrinkable multilayer films having self-weldability, but these films do not have satisfactory easy peelability, and their strength, surface gloss, and suitability for printing, label adhesion, and rapid sealing are also insufficient. Further heat-shrinkable and sealable multilayer films for food packaging are disclosed in Patent Documents 4 and 5, though also these films lack a good balance of self-weldability and peelability.

### CITATION LIST

### Patent Literature

Patent Document 1: Japanese Patent No. 4255215B
Patent Document 2: Japanese Unexamined Patent Application Publication No. H10-34800A
Patent Document 3: Japanese Patent No. 4848020B
Patent Document 4: European Patent Application EP0756931A2
Patent Document 5: European Patent Application EP2116371A1

### SUMMARY OF INVENTION

### Technical Problem

In light of the above facts, a main object of the present invention is to provide a polyamide-based multilayer film having optimal characteristics for applications that require strength, which achieves a good balance of self-weldability and easy peelability demanded in packaging films for meat products such as fresh and processed meats.

A further object of the present invention is to provide a polyamide-based heat-shrinkable multilayer film provided with the surface gloss and suitability for printing or label adhesion desired in packaging applications for meat products such as fresh and processed meats.

Yet another object of the present invention is to provide a polyamide-based heat-shrinkable multilayer film having the heat-shrinkability, strength, heat resistance, suitability for various types of packaging, gas barrier capability, moisture barrier capability, and suitability for rapid sealing generally desired in films for food packaging.

### Solution To Problem

Through research conducted by the present inventors, it was discovered that, to achieve the above objects, it is highly desirable to use a polyamide-based resin as an intermediate layer constituent resin and a heat-resistant thermoplastic resin as an outer surface layer constituent resin, and to use an ethylene-based copolymer having a certain melting point as an inner surface layer constituent resin to produce a controlled mutual adhesion strength on the inner surfaces during hot water treatment. The heat-shrinkable multilayer film of the present invention is based on the above findings, and more specifically, is a heat-shrinkable multilayer film for being filled with contents, comprising an outer surface layer (A) comprising a heat-resistant thermoplastic resin, an intermediate layer (B) comprising a polyamide-based resin, and an inner surface layer (D) comprising an ethylene-based copolymer, an adhesion strength between inner surface layers after treatment with 80°C hot water being from 0.1 to 3.5 N/15 mm, characterized in that the outer surface layer (A) comprises a polyester-based resin, the polyester-based resin being a copolymer polyester comprising a polycondensate of isophthalic acid and terephthalic acid with ethylene glycol, and the inner surface layer (D) is an ethylene-vinyl acetate copolymer having a vinyl acetate content from 6 to 12 mass% and a melting point measured by differential scanning calorimeter in conformance with JIS K7121 of 90 to 100°C.

### Brief Description of Drawing(s)

FIG. 1 is an explanatory diagram of an equipment system advantageous for production of the heat-shrinkable multilayer film of the present invention.
FIG. 2 is a plan view of a bag-shaped packaging material as an example of a packaging material formed from the heat-shrinkable multilayer film of the present invention.
FIG. 3 is a schematic perspective view illustrating a state after a block of a fresh meat has been vacuum-packaged and stored using the bag-shaped packaging material of FIG. 2.
FIG. 4 is a schematic perspective view corresponding to FIG. 3, illustrating a state after a block of fresh meat has been vacuum-packaged and stored using a bag-shaped packaging material comprising a conventional heat-shrinkable multilayer film that is not self-weldable.

### Description of Embodiments

The heat-shrinkable multilayer film of the present invention comprises at least the three layers of an outer surface layer (A) comprising a heat-resistant thermoplastic resin, an intermediate layer (B) comprising a polyamide-based resin, and an inner surface layer (D) comprising an ethylene-based copolymer.

The outer surface layer (A) comprises a heat-resistant thermoplastic resin for providing excellent surface gloss and suitability for printing or label adhesion among the characteristics required in the heat-shrinkable multilayer film of the present invention, and, for providing suitability for rapid sealing due to having a melting point higher than that of the ethylene-based copolymer constituting the inner surface layer (D).
Specifically, the outer surface layer (A) comprises a polyester-based resin, the polyester-based resin being a copolymer polyester comprising a polycondensate of isophthalic acid and terephthalic acid with ethylene glycol.

For general background information, but not claimed, aliphatic polyester-based resins, aromatic polyester-based resins, aliphatic polyamide-based resins, aromatic polyamide-based resins, and the like are useful as the heat-resistant thermoplastic resin constituting the outer surface layer (A).

Generally, aliphatic polyester-based resins and/or aromatic polyester-based resins may be used as the polyester-based resin that constitutes the outer surface layer (A). The dicarboxylic acid component used in the polyester-based resin may be one by which polyester is obtained by an ordinary production method, and in addition to terephthalic acid and isophthalic acid, further examples include dimer acids comprising a dimer of an unsaturated fatty acid, adipic acid, oxalic acid, malonic acid, succinic acid, azaleic acid, sebacic acid, phthalic acid, 5-t-butylisophthalic acid, naphthalene dicarboxylic acid, diphenylether dicarboxylic acid, cyclohexane dicarboxylic acid, and the like. Two or more types thereof may also be used. The diol component used in the polyester-based resin may be one by which polyester is obtained by an ordinary production method, and examples further to ethylene glycol include propylene glycol, tetramethylene glycol, neopentyl glycol, hexamethylene glycol, diethylene glycol, polyalkylene glycol, 1,4-cyclohexane dimethanol, 2-alkyl-1,3-propanediol, 1,4-butanediol, and the like. Two or more types thereof may also be used.

Preferred among these is an aromatic polyester-based resin containing an aromatic dicarboxylic acid component, and particularly preferred is a polyester containing terephthalic acid as the dicarboxylic acid component and a diol having not more than 10 carbons, for example, polyethylene terephthalate, polybutylene terephthalate, and the like. A copolymer polyester resin in which not less than 5 mol%, preferably not greater than 30 mol%, and more preferably not greater than 15 mol%, of the terephthalic acid is substituted with another dicarboxylic acid such as isophthalic acid or a copolymer polyester resin in which some of the diol component such as ethylene glycol is substituted with another diol such as 1,4-cyclohexanediol may also be preferably used. A mixture of two or more different types of polyester-based resin may also be used. Above all, a copolymer polyester in which some, preferably not greater than 30 mol%, and more preferably not greater than 15 mol%, of the terephthalic acid that constitutes polyethylene terephthalate is substituted with isophthalic acid is particularly preferred from the perspective of melt (co-)extrusion processability.

The polyester-based resin used preferably has an instinct viscosity of approximately 0.6 to 1.2. The outer surface layer (A) may also contain up to 20 mass% of a thermoplastic resin other than a polyester-based resin, such as a thermoplastic elastomer typified by thermoplastic polyurethane, or a polyolefin-based resin modified with an acid such as maleic acid or anhydride thereof.

Above all, an outer surface layer (A) in which the heat-resistant thermoplastic resin comprises a polyester-based resin has particularly excellent surface gloss and suitability for printing and label adhesion.

As the outer surface layer (A) comprising a heat-resistant thermoplastic resin is a polyester-based resin, it is preferably thinner than the intermediate layer (B), and in particular, not less than 6% and less than 50% of the thickness of the intermediate layer (B) is preferred because the excellent stretchability and mechanical characteristics of the intermediate layer (B) comprising polyamide-based resin to be described later are maintained.

The polyamide-based resin that constitutes the intermediate layer (B) preferably comprises 60 to 100 mass% of aliphatic polyamide and 0 to 40 mass% of amorphous aromatic polyamide. In particular, to provide the multilayer film with a good balance of stretchability and rigidity, a mixture of 60 to 95 mass% of aliphatic polyamide and 5 to 40 mass% of amorphous aromatic polyamide is preferred, and a mixture of 80 to 90 mass% of aliphatic polyamide and 10 to 20 mass% of amorphous aromatic polyamide is more preferred.

The aliphatic polyamide used preferably has a melting point of not less than 180°C and not greater than 270°C. Above all, polyamide 6 (Nylon 6) polymer (melting point: approximately 225°C), polyamide 6-66 (Nylon 6-66) copolymer (melting point: approximately 180 to 200°C), polyamide 6-12 (Nylon 6-12) copolymer (melting point: approximately 180 to 200°C), and polyamide 6-66-12 (Nylon 6-66-12) copolymer (melting point: approximately 180 to 190°C) are preferred because extrusion processing thereof is easy.

As the amorphous aromatic polyamide, a polycondensate with an aliphatic diamine, having isophthalic acid and terephthalic acid as main acid components, is used. As the acid component, a mixture containing from 40 to 98 mol% of isophthalic acid component and from 2 to 60 mol% of terephthalic acid is preferred. From the perspective of versatility, an amorphous Nylon copolymer commonly known as Nylon 6I-6T (Ny6I-6T), in which the aliphatic diamine comprises hexamethylene only, is particularly preferred.

The polyamide-based resin that constitutes the intermediate layer (B) preferably contains from 5 to 40 mass% of amorphous aromatic polyamide. If the amorphous aromatic polyamide content is less than 5 mass%, stretch film producibility tends to be poor. On the other hand, if it is greater than 40 mass%, the rigidity of the multilayer film will be too high.

The layer thickness of the intermediate layer (B) comprising polyamide-based resin preferably accounts for greater than 15% and not greater than 50%, more preferably from 20 to 45%, and even more preferably from 30 to 40%, of the total thickness of the multilayer film of the present invention. If not greater than 15%, the film tends to be difficult to stretch. If the proportion of the thickness of the intermediate layer (B) is too great, the film may become difficult to stretch and flexibility may be hindered. If necessary, up to 20 mass% of a thermoplastic resin other than a polyamide-based resin, such as an olefin resin modified with an acid such as maleic acid or anhydride thereof, ethylene-acrylic acid copolymer, ethylene-methacrylic acid copolymer, ionomer resin, or saponified ethylene-vinyl acetate copolymer, may be contained in the intermediate layer (B).

To avoid degradation, particularly degradation by permeating oxygen, of the meat product such as fresh or processed meat contained in the package, the heat-shrinkable multilayer film of the present invention may contain a gas barrier layer (C) comprising a gas barrier resin. Known gas barrier resins include partially saponified ethylene-vinyl acetate copolymers (usually called ethylene-vinyl alcohol copolymers (EVOH)), aromatic polyamides containing an aromatic diamine such as polymetaxylene adipamide ("Nylon MXD6"), and the like, but preferred examples of the gas barrier resin that constitutes the gas barrier layer (C) are partially saponified ethylene-vinyl acetate copolymers having a vinyl acetate content of 20 to 50 mol% and a degree of saponification of not less than 95%. The gas barrier layer (C) accounts for from 2 to 20%, preferably from 3 to 18%, and more preferably from 3.5 to 15%, of the total thickness of the multilayer film of the present invention, and its thickness is from 2 to 20 µm and preferably from 2 to 10 µm.

In the heat-shrinkable multilayer film of the present invention, because the inner surface layer (D) is designed to provide a balance of characteristic self-weldability and easy peelability, it provides an important contribution, and comprises an ethylene-based copolymer having a melting point measured by differential scanning calorimeter (DSC) in conformance with JIS K7121 of 90 to 100°C. The type and composition of the ethylene-based copolymer need to be selected such that the adhesion strength between the inner surface layers (i.e., self-weld strength) when treated with 80°C hot water after the inner surface layers of the multilayer film formed into a packaging bag shape are adhered to each other under vacuum-packaging conditions is from 0.1 to 3.5 N/15 mm.

As an ethylene-based copolymer having such characteristics, ethylene-vinyl acetate copolymer (EVA) is used. Self-weld strength tends to increase as the amount of small-quantity (generally less than 30 mass%) components that polymerize with the ethylene in the ethylene-based copolymer increases .

To control the self-weld strength of the multilayer film of the present invention, it is preferred for the crystal melting enthalpy ration at 80°C and bellow (proportion of area of not greater than 80°C to entire crystal melting enthalpy peak area) measured by DSC conforming to JIS K7121, is from 20 to 55% in the ethylene-based copolymer that constitutes the inner surface layer (D). The larger the crystal melting enthalpy ratio, the higher the self-weld strength, and the lower the easy peelability.

The type and composition of the ethylene-based copolymer that constitutes the inner surface layer (D) is selected so as to provide the prescribed self-weld strength through control of the melting point and crystal melting enthalpy ratio described above, but above all, to provide a good balance of self-weld strength and easy peelability, an ethylene-vinyl acetate copolymer (EVA) having a vinyl acetate content from 6 to 12 mass%, and a melting point of 90 to 100°C is used. If the vinyl acetate content is less than 6 mass%, self-weldability is insufficient, and if greater than 15 mass%, easy peelability tends to be unsatisfactory.

The heat-shrinkable multilayer film of the present invention comprises the above-described outer surface layer (A) comprising a heat-resistant thermoplastic resin, an intermediate layer (B) comprising a polyamide-based resin, and an inner surface layer (D) comprising an ethylene-based copolymer as mandatory constituent layers, but if necessary, a gas barrier layer (C) may be provided as an intermediate layer. Known gas barrier resins include partially saponified ethylene-vinyl acetate copolymers (usually called ethylene-vinyl alcohol copolymers (EVOH)), aromatic polyamides containing a diamine such as polymetaxylene adipamide ("Nylon MXD6"), and the like, but preferred examples of the gas barrier resin are partially saponified ethylene-vinyl acetate copolymers having a vinyl acetate content of 20 to 50 mol% and a degree of saponification of not less than 95%.

The heat-shrinkable multilayer film of the present invention contains the above-described outer surface layer (A) comprising a heat-resistant thermoplastic resin, an intermediate layer (B) comprising a polyamide-based resin, and an inner surface layer (D) comprising an ethylene-based copolymer as mandatory constituent layers, and may also contain a gas barrier layer (C) depending on the case, but the above-described adhesive resin layer may also be provided as an intermediate layer if necessary, such as when the adhesion strength between the above layers is not sufficient. As the adhesive resin, EVA, EEA, EAA, acid-modified polyolefins (reaction products of an olefin, copolymer thereof, or the like with an unsaturated carboxylic acid such as maleic acid or fumaric acid or an acid anhydride, ester or metal salt thereof, e.g., acid-modified VLDPE, acid-modified LLDPE, acid-modified EVA), and the like may be used. An advantageous example is an olefin resin modified with an acid such as maleic acid or anhydride thereof or the like.

Furthermore, the heat-shrinkable multilayer film of the present invention comprises an outer surface layer (A) comprising a heat-resistant thermoplastic resin, an intermediate layer (B) comprising a polyamide-based resin, and an inner surface layer (D) comprising an ethylene-based copolymer as mandatory constituent layers, but if necessary, an inner layer (F) to improve moisture barrier capability may be provided as a layer adjacent to and on the inside of the inner surface layer (D). As the inner layer (F), one or a mixture of components selected from low-density polyethylene (LDPE), very-low-density linear polyethylene (VLDPE), linear low-density polyethylene (LLDPE), ethylene-propylene copolymer (PP-Et), ethylene-vinyl acetate copolymer (EVA), ethylene-acrylic acid copolymer (EAA), ethylene-methacrylic acid copolymer (EMMA), ethylene-methyl acrylate copolymer (EMA), ethylene-ethyl acrylate copolymer (EEA), and ethylene-butyl acrylate copolymer (EBA) may be used.

In the above layer configuration, organic lubricants, inorganic lubricants (antiblocking agents), and/or antistatic agents may be added to any layer. Organic and/or inorganic lubricants are preferably contained in, above all, the inner surface layer (D) or the outer surface layer (A) in order to improve film slipperiness when producing the film, bag-forming capability during secondary processing, and suitability for packaging machines during content filling. Additionally, the inner and outer surfaces of the film may be powdered with corn starch or the like if necessary.

Examples of organic lubricants that may be used include hydrocarbon-based lubricants, fatty acid-based lubricants, fatty acid amide-based lubricants, ester-based lubricants, metal soaps, and the like. The organic lubricants may be in liquid or solid form. Among these lubricants, fatty acid amide-based lubricants and metal soaps are preferred due to their miscibility with polyolefin resin. An organic lubricant is preferably used in the proportion of 0.1 to 2 mass% in the desired layers.

Examples of inorganic lubricants (antiblocking agents) that may be used include known inorganic fillers added to resin for the purpose of inhibiting adhesion of the film to itself, for example, talc, diatomaceous earth, silica, zeolite, calcium carbonate, aluminosilicate, and the like. For example, silica, aluminosilicate, zeolite, and the like are preferred from the perspectives of refractive index and dispersibility. The median volume average particle size D50 of the inorganic lubricant measured by Coulter counter is preferably from 0.5 to 10 µm, and more preferably from 1 to 7 µm. For an inorganic lubricant having this average particle size, it is even more preferable to cut the portion of particles greater than 10 µm. An inorganic lubricant is preferably used in the proportion of 0.05 to 2 mass% and particularly preferably 0.1 to 1 mass% in the desired layers.

The organic or inorganic lubricant is preferably added to the desired resin phase of the resins that constitute the desired layer or a resin miscible with it, as a master batch containing the lubricant in a concentration of, for example, from 1 to 10 mass%.

As an antistatic agent, a surfactant is preferably used. As surfactants, an anionic surfactant, cationic surfactant, nonionic surfactant, amphoteric surfactant, or a mixture thereof may be used. An antistatic agent may be added as necessary in a proportion of 0.05 to 2 mass% relative to the resin of the layer to which it is added.

In the heat-shrinkable multilayer film of the present invention, the above layers are laminated, and the final thickness achieved by stretching and relaxation is from 10 to 200 µm, preferably from 15 to 150 µm, and more preferably from 20 to 150 µm.

More specifically, the outer surface layer (A) comprising a heat-resistant thermoplastic resin is preferably from 0.5 to 25 µm, particularly 1 to 15 µm; the intermediate layer (B) comprising polyamide-based resin is from 3 to 50 µm, preferably from 4 to 45 µm, in a range such that the proportion relative to the above total thickness is maintained; the gas barrier layer (C) is, for example, from 1 to 30 µm, preferably from 2 to 15 µm; the inner surface layer (D) comprising ethylene-based copolymer is in the range of 1 to 150 µm, preferably from 10 to 150 µm; and, when an inner layer (F) is provided adjacent to the inner surface layer (D), its thickness is from 5 to 100 µm (from 10 to 150 µm as the total including the inner surface layer (D)).
When the thickness of the inner surface layer (D) is less than 10 µm, seal strength tends to be unsatisfactory, and even if an inner layer (F) is provided, when the thickness of the inner surface layer (D) is less than 1 µm, it may melt and flow when heat sealing is performed, and sealing capability may be lost. On the other hand, when the thickness of the inner surface layer (D) (or the total thickness including the inner layer (F)) is greater than 150 µm, stretchability may be poor.

A plurality of adhesive resin layers may be provided, but the thickness of each is preferably from 0.5 to 5 µm.

The heat-shrinkable multilayer film of the present invention may be produced by the tenting method, but it is more preferably produced as follows by the inflation method.

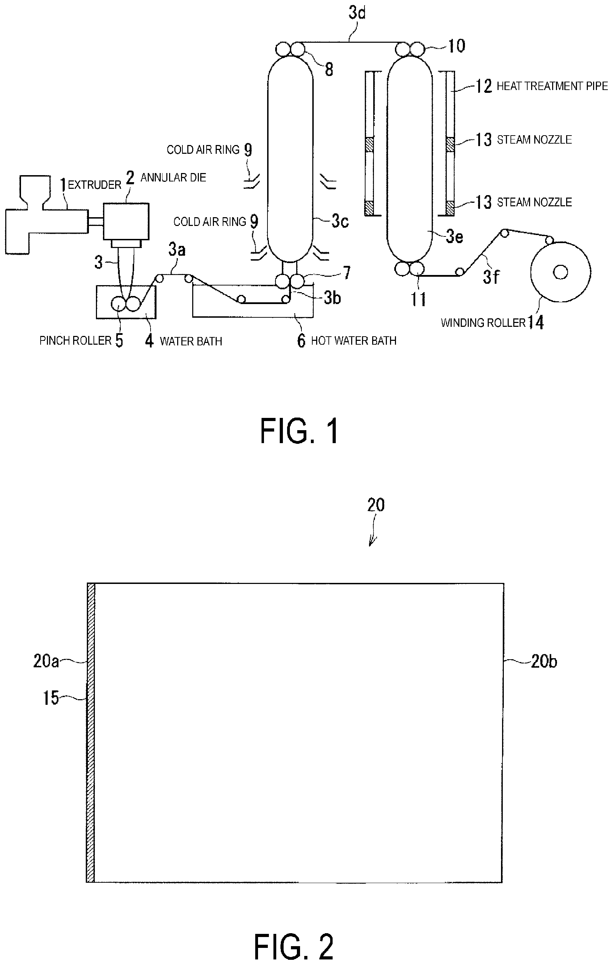

A tubular multilayer film is formed by co-extruding at least three types of melted thermoplastic resin in tubular form from a number of extruders corresponding to the number of types of laminated resin (at least three) that constitute the multilayer film, to form a tubular body having an outer surface layer (A) comprising a heat-resistant thermoplastic resin, an intermediate layer (B) comprising a polyamide-based resin, an inner surface layer (D) comprising an ethylene-based copolymer, and, depending on the case, further containing a gas barrier layer (C) and/or an inner layer (F); water-cooling the tubular body to not greater than the melting point of the primary resin contained in each of the layers; reheating the tubular body using 75 to 90°C hot water; stretching the tubular body 250% to 400% in the vertical direction and the circumferential direction while pulling it in the vertical direction while inserting fluid inside the tubular body, to form a biaxially stretched tubular film; performing relaxation heat treatment using 60 to 98°C steam or hot water from the side nearest the outer surface layer (A) of a tubular body that was re-formed by folding the biaxially stretched tubular film and inserting fluid inside of it such that the respective relaxation ratios in the vertical direction and the circumferential direction are from 2 to 25%; and then cooling. The tubular heat-shrinkable multilayer film formed in this manner itself corresponds to the heat-shrinkable multilayer film of the present invention and may be used unaltered as a material for automated packaging of meat products, but it may be prepared as packaging material in the form of a long flat film for automated packaging by cutting it in advance along the long direction, or, by cutting, it may be prepared as individual cylindrical bag-shaped or pouch-shaped packaging materials of which one end has been shrunk and pre-sealed.
More specifically, referring to FIG. 1, the tubular heat-shrinkable multilayer film described above is produced by, for example, the following method using the inflation method.

A tube (parison) 3 containing an outer surface layer (A) comprising a polyester-based resin, an intermediate layer (B) comprising a polyamide-based resin, and an inner surface layer (D) comprising an ethylene-based copolymer is co-extruded through an annular die 2 from a number of extruders (only one extruder is illustrated) corresponding to the number of types of laminated resin that constitute the multilayer film, and it is taken up by pinch rollers 5 while being cooled by a water bath 4 to a temperature not greater than the melting point of the primary resin contained in each of the layers, and preferably to not greater than 40°C. Then, the taken-up tubular film 3a is introduced into a hot water bath 6 having a temperature of, for example, 75 to 90°C, while an antiblocking agent typified by soybean oil or the like is enclosed as necessary. The heated tubular film 3b is then drawn upward, and a bubble-shaped tube 3c is formed by fluid air introduced between a pair of pinch rollers 7 and 8. While being cooled by an air ring 9 at a temperature of 10 to 20°C, it is simultaneously biaxially stretched in the vertical direction (MD) and the circumferential direction (TD) at a stretch ratio of 250 to 400%, preferably 280 to 400%.
Then, the tubular film 3d after stretching is drawn downward, and a bubble-shaped tube 3e is again formed by fluid air introduced between a pair of pinch rollers 10 and 11, and then it is held inside a heat-treatment pipe 12. Then, steam is blown (or hot water is sprayed) from nozzles 13 of the heat-treatment pipe 12, and the tubular film 3e after biaxial stretching is heat-treated for 1 to 20 seconds, preferably 1.5 to 10 seconds, at 60 to 98°C, preferably 60 to 80°C, to relax (shrink) the tubular film 3e by 2 to 25% each in the vertical direction (MD) and transverse direction (TD), and preferably by 5 to 15% in each direction. The tubular film 3f after heat treatment corresponds to the heat-shrinkable multilayer film of the present invention, and is wound onto a winding roller 14.

The film may be irradiated by a known method before or after stretching in the production method of the heat-shrinkable multilayer film described above.

The heat-shrinkable multilayer film of the present invention produced in the above manner is characterized in that the adhesion strength between inner surface layers after 80°C hot water treatment is from 0.1 to 3.5 N/15 mm. When the self-weld strength is less than 0.1 N/15 mm, adhesion strength is unsatisfactory, and it peels easily upon slight impact to the package, and juice of the contents separates out, resulting in a poor appearance. On the other hand, when it exceeds 3.5 N/15 mm, adhesion strength is high and easy peelability is poor.
The self-weld strength is preferably from 0.5 to 3 N/15 mm, and more preferably from 1 to 3 N/15 mm. Additionally, preferred characteristics of the heat-shrinkable multilayer film of the present invention are a shrinkage ratio in 80°C hot water of not less than 20% and more preferably not less than 25% each in the MD and TD, and even more preferably not less than 25% in the MD and not less than 30% in the TD, haze of not greater than 10%, gloss of not less than 100%, oxygen permeability (23°C, 80% RH) of not greater than 100 cm³/m²/24 h·atm, and moisture permeability (40°C, 90% RH) of not greater than 40 g/m²/24 h.

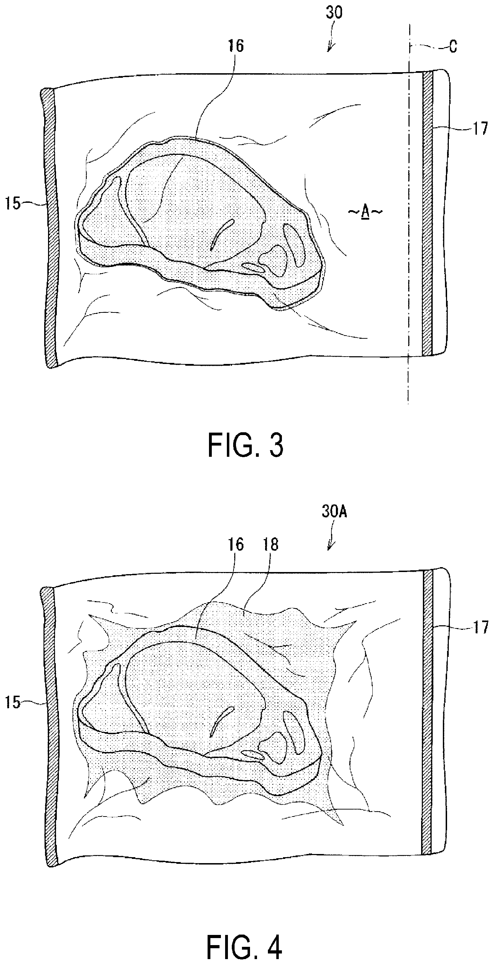

The obtained heat-shrinkable multilayer film of the present invention, as illustrated in FIG. 2 (plan view) as an example, has the form of a hollow cylindrical packaging bag 20 in which a seal portion 15 is formed at one end 20a, and the other end 20b is open. As illustrated in FIG. 3, a meat product 16 such as fresh meat is inserted into the packaging bag 20 from the open end 20b side, and a seal portion 17 is formed on the end 20b side while evacuating, to vacuum-package the meat product 16. Then, by heat treatment of immersing in or showering with, for example, 80°C (generally 75 to 85°C) hot water for approximately 3 seconds (generally from 1 to 20 seconds), for 3 seconds (generally 1 to 20 seconds), the film that forms the packaging bag 20 is heat-shrunk, and at the same time, the film inner surface layers surrounding the meat product, including the intermediate region A between the seal portion 17 and the meat product 16, fuse (self-weld) to each other, resulting in a packaged meat product 30. In the packaged meat product 30 formed in this manner, as illustrated in the sketch of FIG. 3, juice does not seep out around the periphery even after the vacuum package containing 1.5 kg of beef round in a bag material measuring, for example, approximately 25 cm × 35 cm is refrigerated for approximately one month at a low temperature of 0°C. In contrast, with a packaged meat product 30A similarly formed by vacuum-packaging and heat-shrinking but using a packaging bag comprising a heat-shrinkable multilayer film lacking self-weldability of the inner layers, as illustrated in the sketch of FIG. 4, the juice seeps out around the meat product 16 and forms pools of juice 18 when similarly refrigerated for approximately one month at 0°C.

A consumer who has purchased the meat product 30 obtained in the above manner can remove the meat product 16 from the packaging bag by cutting a notch C using a knife or the like at any position in the intermediate region A between the meat product 16 and the seal portion 17, as illustrated in FIG. 3, and after detaching the seal portion 17 side, easily peeling the self-weld portion of the intermediate region A from the remaining open end with two fingers.

### Examples

The present invention will be described in detail hereinafter based on working examples and comparative examples, but the present invention is not limited to these examples. Note that the methods for measuring the physical properties listed in the specification of the present application are as follows.

Measurement of Melting Point and Crystal Melting Enthalpy Ratio The melting point (Tm) was measured by DSC (differential scanning calorimeter) in conformance with JIS K7121. To determine the crystal melting enthalpy ratio, a DSC curve for the sample resin was determined by heating to 200°C in conformance with JIS K7121. Then, the entire crystal melting enthalpy was determined based on the peak area of the temperature range from the start to the end of melting. The crystal melting enthalpy at a specified temperature (80°C) and below was determined by calculation of the area of that portion based on the results of calculating the entire crystal melting enthalpy. Then, the crystal melting enthalpy ratio was determined by the following formula.
Crystal melting enthalpy ratio (%) = (crystal melting enthalpy value at specified temperature (80°C) and below) / (entire crystal melting enthalpy value) × 100

### Hot Water Shrinkage Ratio

The hot water shrinkage ratio of the heat-shrinkable multilayer film was measured by the following method in conformance with ASTM D2732. Specifically, a sample with marks printed 10 cm apart in the MD (vertical direction) and in the TD (transverse direction) of the heat-shrinkable multilayer film was immersed for 10 seconds in 80°C hot water and then removed. It was immediately cooled with roomtemperature water, and then the distance between marks was measured. The measured value was subtracted from 10 cm, and the ratio of the obtained value divided by 10 cm was taken as the hot water shrinkage ratio (units: %) displayed as a percentage for the TD and for the MD (average value of n = 5 samples). From the perspectives of appearance, transparency, and storability of the vacuum-packaged meat product, the hot water shrinkage ratio is preferably not less than 20% and more preferably not less than 25% in both the MD and the TD, and particularly preferably, it is not less than 25% in the MD and not less than 30% in the TD.

### Density and Melting Point

The density of the resin materials was measured in conformance with ASTM D1505, and the melting point was measured in conformance with JIS K7121.

### MFR

The MFR of the resin materials was measured at 190°C under load of 21.18 N using a melt indexer manufactured by Toyo Seiki Seisaku-Sho, Ltd., in conformance with ASTM D1238.

### Haze

The transparency of the heat-shrinkable multilayer film was measured as haze (units: %) using a haze meter NDH-2000 manufactured by Nippon Denshoku Industries Co., Ltd., in conformance with JIS K7105 (average value of n = 5 samples). To improve transparency of the packaged meat product, it is preferred that haze is not greater than 10%.

### Gloss

As the gloss (units: %) of the roller surface portion of the heat-shrinkable multilayer film, the gloss on a roll surface was measured for the TD and for the MD using a glossmeter VG-2000 manufactured by Nippon Denshoku Industries Co., Ltd., with the angle of incidence and the angle of reflection of light set to 60°, in conformance with JIS Z8741 (average value of n = 5 samples). To improve the appearance of the packaged meat product, it is preferred that gloss is not less than 100%.

### Seal Strength

For measuring the seal strength of the heat-shrinkable multilayer film, a sample was created by impulse sealing under the following conditions using a vacuum packer (Multivac AGW). Sealing time: 2 seconds; sealing pressure: 1 kg/cm²; sealing bar width: 1 mm; sealing temperature: 160 ± 2°C

Then, after the sample was allowed to stand (humidified) for 1 day in an atmosphere at 23°C and 50% RH, the impulse sealed portion of the sample was measured by the method described below. The measured value was expressed as the average value of n = 5 samples. To improve the overall strength of the vacuum-packaged product, the seal strength is preferably not less than 15 N/15 mm, and this seal strength is preferably assured even in rapid sealing.
- Measurement device: Tensile tester Tensilon RTM-100 manufactured by Orientec Co., Ltd.
- Distance between chucks: 20 mm
- Chuck speed: 300 mm/min
- Sample width: 15 mm
- Temperature: 23°C
- Humidity: 50% RH

### Oxygen Permeability

The oxygen permeability of the heat-shrinkable multilayer film was measured at 23°C and relative humidity (RH) 80% using OX-TRAN model 2/20 manufactured by Modern Controls, Inc., in conformance with ASTM D3985. The units are cm³/24 h/atm. From the perspective of preventing degradation of contents, the oxygen permeability is preferably not greater than 100 cm³/24 h/atm.

### Moisture Permeability

The moisture permeability of the heat-shrinkable multilayer film was measured at 40°C and relative humidity 90% using PERMATRAN model W3/31 manufactured by Modern Controls, Inc., in conformance with ASTM F1249. The units are g/m²/24 h. From the perspective of preventing ullage of the contents, moisture permeability is preferably not greater than 40 g/m²/24 h.

### Stretchability

Stretchability was evaluated based on the following criteria based on stability of a stretch bubble formed by the inflation method.
A: Film can be produced by inflation, and stretch bubble nearly does not fluctuate.
B: Film can be produced by inflation, but stretch bubble fluctuates and lacks stability, and there are wrinkles in film.
C: Film cannot be produced by inflation.

### Bag-Forming Processability

The bag-forming processability of the heat-shrinkable multilayer film (folded width 350 mm) was evaluated based on the following criteria by forming a bag (width 350 mm, length 500 mm) of the heat-shrinkable multilayer film using a bag maker model BM37 manufactured by Kureha Corp.

### Bag-Forming Processability Evaluation Criteria

A: During continuous operation for 8 hours, the produced bag was fed smoothly to the subsequent step and wrinkles were not generated in the bag when produced.
B: Generation of wrinkles in the bag was seen when produced, but the produced bag was fed to the subsequent step.
C: The produced bag got caught near the sealing portion of the bag maker, and continuous operation was difficult.

### Bag Openability

The bag openability of the heat-shrinkable multilayer film was evaluated based on the following criteria by producing a bag sealed on one end and open on the other end from the heat-shrinkable multilayer film using a bag maker model BM37 manufactured by Kureha Corp.

### Bag Openability Evaluation Criteria

A: When the bag was placed on a horizontal surface and the top side of the opening of the bag was lifted up, the entire inner side of the bag opened.
B: When the bag was placed on a horizontal surface and the top side of the opening of the bag was lifted up, a part of the inner side of the bag adhered.
C: When the bag was placed on a horizontal surface and the top side of the opening of the bag was lifted up, substantially the entire inner side of the bag adhered.

### Self-Weldability

### 1. Inner Side Adhesion Strength (Self-Weld Strength) Measurement

As a sample, a bag measuring 200 mm wide × 250 mm long sealed on three sides by impulse sealing was produced, and as the article to be packaged, fresh meat (approximately 600 g) measuring approximately 80 mm wide, 80 mm thick, and 100 mm long was put in the pouch, and a vacuum package was obtained using a vacuum packer (Multivac AGW). The obtained package was immersed for approximately 3 seconds in 80°C hot water to heat-shrink it, and then immediately cooled with cold water, and a sample for self-weld strength measurement was obtained.

After the obtained sample was allowed to stand (humidified) for 1 day in an atmosphere at 23°C and 50% RH, the adhesion strength between the inner sides of the edges of the sample (self-weld strength) was measured by the method described below. The measured value was expressed as the average value of n = 5 samples.
- Measurement device: Tensile tester Tensilon RTM-100 manufactured by Orientec Co., Ltd.
- Distance between chucks: 20 mm
- Chuck speed: 300 mm/min
- Sample width: 15 mm
- Temperature: 23°C
- Humidity: 50% RH

### Easy Peelability

In item 1 above, the edge (self-weld portion) of the package was cut with a knife after refrigeration at 5°C, the cut portion was opened by hand, and it was determined whether or not the contents were easily removed based on the following criteria.
A: Adhesion portion between inner surface layers of edge of package could be peeled easily by hand and contents were removed.
C: Adhesion portion between inner surface layers of edge of package could not be peeled easily by hand.
D: An adhesion portion was not formed between inner surface layers of edge of package, peeling (delamination) occurred, and juices flowed in, resulting in poor appearance.

### Film Producibility

Film producibility was evaluated based on the following criteria based on stability of a stretch bubble formed by the inflation method.
A: Film can be produced by inflation, and stretch bubble nearly does not fluctuate.
B: Film can be produced by inflation, but stretch bubble fluctuates and lacks stability, and there are wrinkles in film.
C: Film cannot be produced by inflation.

The names, summaries, product names, characteristics, and the like of the resin materials used in the working examples and comparative examples given below are as follows.
- Ny-A: Nylon 6-66 copolymer; "Amilan CM6241F" manufactured by Toray Industries, Inc. Density: 1.13 g/cm³, melting point: 190°C
- Ny-B: Amorphous Nylon 6I-6T copolymer; "Grivory G21" manufactured by EMS-Chemie Japan, Ltd. Density: 1.18 g/cm³, glass transition temperature: 125°C
- Ny-C: Nylon 6 polymer; "UBE Nylon #1030B" manufactured by Ube Industries, Ltd. Melting point: 220°C
- NY-1: Blend of 80 mass% Ny-A + 20 mass% Ny-B
- NY-2: Blend of 70 mass% Ny-A + 30 mass% Ny-B
- NY-3: Blend of 65 mass% Ny-C + 35 mass% Ny-B
- co-PET: Ethylene terephthalate-isophthalate copolymer (terephthalic acid: 88 mol%, isophthalic acid: 12 mol%); "Bellpet IFG-8L" manufactured by Bell Polyester Products, Inc. Density: 1.395 g/cm³, melting point: 228°C, instinct viscosity: 0.8
- EVOH: Saponified ethylene-vinyl acetate copolymer (vinyl acetate content: 48%); "EVAL G156B" manufactured by Kuraray Co., Ltd. Melting point: 160°C, MRF: 6.4 g/10 min (190°C, load: 21.18 N)
- PVDC: Vinylidene chloride-vinyl chloride copolymer; "Krehalon FB-9" manufactured by Kureha Corp.
- EVA-A: Ethylene-vinyl acetate copolymer (vinyl acetate content: 12 mass%); "Escorene Ultra, FL 00212" manufactured by ExxonMobil Chemical Company. Density: 0.934 g/cm³, MFR: 2.5 g/10 min (190°C, load: 21.18 N), melting point: 93°C
- EVA-B: Ethylene-vinyl acetate copolymer (vinyl acetate content: 10 mass%); "Ultracene 540" manufactured by Tosoh Corp. Density: 0.929 g/cm³, MFR: 3.0 g/10 min (190°C, load: 21.18 N), melting point: 96°C
- EVA-C: Ethylene-vinyl acetate copolymer (vinyl acetate content: 7.5 mass%); "NUC-8430" manufactured by Nippon Unicar Co., Ltd. Density: 0.93 g/cm³, MFR: 2.3 g/10 min (190°C, load: 21.18 N), melting point: 100°C
- EVA-D: Ethylene-vinyl acetate copolymer (vinyl acetate content: 15 mass%); "Ultracene 626" manufactured by Tosoh Corp. Density: 0.936 g/cm³, MFR: 3.0 g/10 min (190°C, load: 21.18 N), melting point: 90°C
- EVA-E: Ethylene-vinyl acetate copolymer (vinyl acetate content: 18 mass%); "Escorene Ultra, FL 00218" manufactured by Exxon Mobil Chemical Company. Density: 0.940 g/cm³, MFR: 1.7 g/10 min (190°C, load: 21.18 N), melting point: 86°C
- EVA-F: Ethylene-vinyl acetate copolymer (vinyl acetate content: 25 mass%); "Ultracene 640" manufactured by Tosoh Corp. Density: 0.948 g/cm³, MFR: 2.8 g/10 min (190°C, load: 21.18 N), melting point: 78°C
- EEA-1: Ethylene-ethyl acrylate copolymer (EA content: 20 wt%); "Rexpearl EEA A4200" manufactured by Japan Polyethylene Corp. MFR: 5.0 g/10 min (190°C, load: 21.18 N), melting point: 96°C
- EEA-2: Ethylene-ethyl acrylate copolymer; "DPDJ-6182" manufactured by Nippon Unicar Co., Ltd.
- EMA: Ethylene-methacrylate copolymer (MA content: 18 wt%); "Elvaloy AC1218" manufactured by DuPont-Mitsui Polychemicals Co., Ltd. Density: 0.940 g/cm³, MFR: 2.0 g/10 min (190°C, load: 21.18 N), melting point: 94°C
- EAA: Ethylene-acrylic acid copolymer (AA content: 9.7 wt%); "Primacor 1410" manufactured by The Dow Chemical Company. Density: 0.938 g/cm³, MFR: 1.5 g/10 min (190°C, load: 21.18 N), melting point: 97.8°C
- EMAA: Ethylene-methacrylic acid copolymer (MAA content: 12 wt%); "Nucrel N1207C" manufactured by DuPont-Mitsui Polychemicals Co., Ltd. Density: 0.940 g/cm³, MFR: 7 g/10 min (190°C, load: 21.18 N), melting point: 96°C
- VL-1: Very-low-density polyethylene
   (ethylene-α-olefin copolymer); "Moretec V-0398CN" manufactured by Prime Polymer Co., Ltd. Density: 0.907 g/cm³, melting point: 117°C, MRF: 3.0 g/10 min (190°C, load: 21.18 N)
- VL-2: Very-low-density polyethylene; density: 0.908 g/cm³, melting point: 119°C, MRF: 3.0 g/10 min (190°C, load: 21.18 N)
- SSC-VLDPE: Very-low-density polyethylene (ethylene-α-olefin copolymer); density: 0.902 g/cm³, melting point: 100°C, MRF: 3.0 g/10 min (190°C, load: 21.18 N)
- IO-1: Ionomer; "Himilan 1650" manufactured by DuPont-Mitsui Polychemicals Co., Ltd. Density: 0.950 g/cm³, MFR: 1.5 g/10 min (190°C, load: 21.18 N), melting point: 96°C; Zn ionized
- IO-2: Ionomer; Density: 0.94 g/cm³, melting point: 90°C, MFR: 3.1 g/10 min (190°C, load: 21.18 N), degree of Na ionization: 8%
- M-PO: Unsaturated carboxylic acid-modified very-low-density polyethylene; "Admer SF730" manufactured by Mitsui Chemicals, Inc. Density: 0.902 g/cm³, melting point: 119°C, MFR: 2.7 g/10 min (190°C, load: 21.18 N)
   Furthermore, the names and summaries of the lubricants used in the inner and outer surface layers of the laminated film in the working examples and comparative examples given below are as follows.
- LUB-1: Master batch of inorganic lubricant: co-PET base, containing 2.5 mass% of SiO₂
- LUB-2: Master batch of inorganic lubricant and organic lubricant: polyethylene (VLDPE) base, containing 4 mass% of SiO₂ and 2 mass% of erucamide

### (Working Example 1)

### Preparation of Heat-Shrinkable Multilayer Film

A heat-shrinkable multilayer film having a six-layer configuration was prepared using the following five types of resin material (1) to (5).

(1) Outer surface layer (A): Mixture of 92 mass% of the above co-PET, 8 mass% of LUB-1
(2) Intermediate layer (B): The above Ny-1
(3) Gas barrier layer (C): The above EVOH
(4) Inner surface layer (D): Mixture of 90 mass% of the above EVA-A, 10 mass% of LUB-2
(5) Adhesion layer (E): The above M-PO

A six-layer heat-shrinkable multilayer film having the layer configuration (A)/(E)/(B)/(C)/(E)/(D) (thickness ratio: 2/1.5/12/4/1.5/19) was produced by the following co-extrusion method using the above five types of resin material ((A) to (E)) of (1) to (5) above. Specifically, the five types of resin material (1) to (5) were individually supplied to five respective extruders, and after melt-kneading each at a resin temperature of 180 to 240°C, the melted resin materials were simultaneously supplied to a co-extrusion annular die so as to result in the above six layers in order from the outer side in the prescribed thickness ratio, and a tube was co-extruded as six layers inside the die. The tube was quenched in a 10 to 18°C water bath, and a flat tube having a flat width of 136 mm and thickness 325 µm was obtained. Next, the flat tube was passed through an 88°C hot water bath, and then air was injected into the tube-shaped tube, and it was simultaneously biaxially stretched with a stretch ratio of 290% in the vertical direction (MD) and 310% in the transverse direction (TD) by the inflation method while being cooled with an 15 to 20°C air ring at a temperature of 15 to 20°C. The biaxially stretched film was then introduced into a heat-treatment pipe 2 m long and heated to 70°C as a tube shape by steam blown from steam nozzles, and by heat treatment for 2 seconds while relaxing the tube 5% in the vertical direction and 5% in the transverse direction, a heat-shrinkable multilayer film having a folded width of 400 mm and thickness of 40 µm was obtained. The layer configuration (composition and layer thickness) of the obtained heat-shrinkable multilayer film is summarized in Table 1 together with those of the other working examples and comparative examples described below.

Tables 2 and 3 show the measurement results of crystal enthalpy ratio of the inner surface layer resin, as well as the measurement and evaluation results of haze, gloss, hot water shrinkage ratio, oxygen permeability, moisture permeability, film producibility, bag-forming processability, bag openability, pillow package suitability, and self-weldability of the obtained heat-shrinkable multilayer film, together with those of the other working examples and comparative examples described below.

### (Working Example 2)

A heat-shrinkable multilayer film was obtained in the same manner as Working Example 1 except that the EVA-A (vinyl acetate content: 12%) of the inner surface layer (D) was changed to EVA-B (vinyl acetate content: 10%, melting point: 96°C).

### (Working Example 3)

A heat-shrinkable multilayer film was obtained in the same manner as Working Example 1 except that the EVA-A of the inner surface layer (D) was changed to EVA-C (vinyl acetate content: 7.5%, melting point: 100°C), and the Ny-1 of the intermediate layer (B) was changed to Ny-2.

### (Comparative Example 4)

A heat-shrinkable multilayer film was obtained in the same manner as Working Example 1 except that the EVA-A of the inner surface layer (D) was changed to IO-1 (Zn-ionized ionomer, melting point: 96°C).

### (Comparative Example 5)

A heat-shrinkable multilayer film was obtained in the same manner as Working Example 1 except that the EVA-A of the inner surface layer (D) was changed to EEA-1 (melting point: 96°C).

### (Comparative Example 6)

A heat-shrinkable multilayer film was obtained in the same manner as Working Example 1 except that the EVA-A of the inner surface layer (D) was changed to EMA (melting point: 94°C).

### (Working Example 7)

A heat-shrinkable multilayer film was obtained in the same manner as Working Example 1 except that the resin thickness configuration of Working Example 1 was changed as shown in Table 2 and the total thickness was 50 µm.

### (Working Example 8)

A heat-shrinkable multilayer film was obtained in the same manner as Working Example 1 except that the resin thickness configuration of Working Example 1 was changed as shown in Table 1, the total thickness was 70 µm, and the Ny-1 of the intermediate layer (B) was changed to Ny-3.

### (Working Example 9)

VL-1 as an inner layer (F) was inserted between the adhesion layer (E) and the inner surface layer (D) in the layer configuration of Working Example 1, and a heat-shrinkable multilayer film having a seven-layer configuration overall and having the thickness ratio shown in Table 1 was obtained.

### (Comparative Example 10)

A heat-shrinkable multilayer film was obtained in the same manner as Working Example 1 except that the EVA-A of the inner surface layer (D) was changed to EAA (melting point: 97.8°C).

### (Comparative Example 11)

A heat-shrinkable multilayer film was obtained in the same manner as Working Example 1 except that the EVA-A of the inner surface layer (D) was changed to EMAA (melting point: 96°C).

### (Comparative Example 1)

A heat-shrinkable multilayer film was obtained in the same manner as Working Example 3 except that the EVA-A of the inner surface layer (D) was changed to VL-1 (melting point: 117°C).

### (Comparative Example 2)

A heat-shrinkable multilayer film was obtained in the same manner as Working Example 1 except that the EVA-A of the inner surface layer (D) was changed to EVA-D (vinyl acetate content: 15%, melting point: 90°C).

### (Comparative Example 3)

A heat-shrinkable multilayer film was obtained in the same manner as Working Example 1 except that the EVA-A of the inner surface layer (D) was changed to EVA-E (vinyl acetate content: 18%, melting point: 86°C).

### (Comparative Example 4)

Production of a heat-shrinkable multilayer film was attempted in the same manner as Working Example 1 except that the EVA-A of the inner surface layer (D) was changed to EVA-F (vinyl acetate content: 25%, melting point: 78°C), but when the flat parison was heated with 88°C hot water, the inner surfaces of the parison fused together with no opening, and it was not submitted to the stretching step.

### (Comparative Example 5)

According to Working Example 1 of Patent Document 1, a seven-layer configuration of SSC-VLDPE/EVA-A/EEA-2/PVDC/EEA-2/EVA-B/IO-2 from the outer layer side of the film as shown in Table 2 (wherein the EVA-A contained 0.2 mass% of erucamide and 0.2 mass% of stearic acid mono- and diglyceride boric acid ester, and the IO-2 contained 2 mass% of silica and 0.38 mass% of erucamide), in which the thicknesses of the layers in the above layer configuration were 3/22/1.5/7/1.5/15/10 µm (total thickness 60 µm), was produced by the following co-extrusion method. Specifically, the six types of resin material shown in Table 2 were individually supplied to six respective extruders, and after melt-kneading each at a resin temperature of 180 to 200°C, the melted resin materials were simultaneously supplied to a co-extrusion annular die so as to result in the above seven layers in order from the outer side with the prescribed thickness ratio, and a tube was co-extruded as seven layers inside the die. The tube was quenched in a 10 to 18°C water bath, and a flat tube was obtained. Then, the flat tube was subjected to electron beam radiation from the outside of the tube in an electron beam irradiation device with an acceleration voltage of 300 KeV to result in a radiation dose of 80 kGy. Next, it was passed through an 82°C hot water bath, and then air was injected into the tube-shaped tube, and it was simultaneously biaxially stretched with a stretch ratio of 310% in the vertical direction (MD) and 300% in the transverse direction (TD) by the inflation method while being cooled with an air ring having a temperature of 15 to 20°C.

### (Comparative Example 6)

A heat-shrinkable multilayer film was produced by co-extrusion according to Working Example 4 of Patent Document 1. Specifically, a heat-shrinkable multilayer film was produced in the same manner as Working Example 1 except that the resin materials and thickness configuration were changed as shown in Table 2, wherein VL-2 was used in the inner surface layer (D), NY-A was used in the intermediate layer (B), and the resin layer configuration was changed to (A)/(E)/(B)/(C)/(E)/(D) (thickness ratio: 2/1.5/7/5/1.5/21) (total thickness: 38 µm). The production conditions were the same as Working Example 1 except that the hot water bath temperature before stretching was 90°C, the stretch ratio was 300% in the vertical direction and 310% in the transverse direction, and in the subsequent heat treatment step, it was relaxed 10% in the vertical direction and 10% in the transverse direction.

A summary of the layer configurations of the heat-shrinkable multilayer films according to the above working examples and comparative examples is shown in Table 1, and a summary of the evaluation results is shown in Tables 2 and 3. The compositions Working Examples 4-6, 10 and 11 in tables 1 and 2 are Comparative Examples.

**[Table 1-I]**

| | | Layer configuration of heat-shrinkable multilayer film | | | |
|---|---|---|---|---|---|
| | | Outer surface layer (A) | Mass ratio | Adhesion layer (E) | Intermediate layer (B) |
| Working Example 1 | Composition | co-PET | 98 | M-PO | Ny-1 |
| | | LUB-1 | 2 | | |
| | Thickness (µm) | 2 | | 1.5 | 12 |
| Working Example 2 | Composition | co-PET LUB-1 | 98 2 | M-PO | Ny-1 |
| | Thickness (µm) | 2 | | 1.5 | 12 |
| Working Example 3 | Composition | co-PET | 98 | M-PO | Ny-2 |
| | | LUB-1 | 2 | | |
| | Thickness (µm) | 2 | | 1.5 | 12 |
| Working Example 4 | Composition | co-PET | 98 | M-PO | Ny-1 |
| | | LUB-1 | 2 | | |
| | Thickness (µm) | 2 | | 1.5 | 12 |
| Working Example 5 | Composition | co-PET | 98 | M-PO | Ny-1 |
| | | LUB-1 | 2 | | |
| | Thickness (µm) | 2 | | 1.5 | 12 |
| Working Example 6 | Composition | co-PET | 98 | M-PO | Ny-1 |
| | | LUB-1 | 2 | | |
| | Thickness (µm) | 2 | | 1.5 | 12 |
| Working Example 7 | Composition | co-PET | 98 | M-PO | Ny-1 |
| | | LUB-1 | 2 | | |
| | Thickness (µm) | 2 | | 1.5 | 15 |
| Working Example 8 | Composition | co-PET | 92 | M-PO | Ny-3 |
| | | LUB-1 | 8 | | |
| | Thickness (µm) | 3 | | 2 | 20 |
| Working Example 9 | Composition | co-PET | 98 | M-PO | Ny-1 |
| | | LUB-1 | 2 | | |
| | Thickness (µm) | 2 | | 1.5 | 12 |
| Working Example 10 | Composition | co-PET | 98 | M-PO | Ny-1 |
| | | LUB-1 | 2 | | |
| | Thickness (µm) | 2 | | 1.5 | 12 |
| Working Example 11 | Composition | co-PET | 98 | M-PO | Ny-1 |
| | | LUB-1 | 2 | | |
| | Thickness (µm) | 2 | | 1.5 | 12 |
| Comparative Example 1 | Composition | co-PET | 98 | M-PO | Ny-1 |
| | | LUB-1 | 2 | | |
| | Thickness (µm) | 2 | | 1.5 | 12 |
| Comparative Example 2 | Composition | co-PET | 98 | M-PO | Ny-1 |
| | | LUB-1 | 2 | | |
| | Thickness (µm) | 2 | | 1.5 | 12 |
| | Composition | co-PET | 98 | M-PO | Ny-1 |
| Comparative Example 3 | | LUB-1 | 2 | | |
| | Thickness (µm) | 2 | | 1.5 | 12 |
| Comparative Example 4 | Composition | co-PET | 98 | M-PO | Ny-1 |
| | | LUB-1 | 2 | | |
| | Thickness (µm) | 2 | | 1.5 | 12 |
| Comparative Example 5 | Composition | SSC-VLDPE | 100 | EVA-E | EEA-2 |
| | Thickness (µm) | 3 | | 22 | 1.5 |
| Comparative Example 6 | Composition | co-PET | 98 | M-PO | Ny-A |
| | | LUB-1 | 2 | | |
| | Thickness (µm) | 2 | | 1.5 | 7 |

**[Table 1-II]**

| | Layer configuration of heat-shrinkable multilayer film | | | | | | Total thickness (µm) |
|---|---|---|---|---|---|---|---|
| | | Gas barrier layer (C) | Adhesion layer (E) | Inner layer (F) | Inner surface layer (D) | Mass ratio | |
| Working Example 1 | Composition | EVOH | M-PO | | EVA-A | 90 | 40 |
| | | | | | LUB-2 | 10.0 | |
| | Thickness (µm) | 4 | 1.5 | | 19 | | |
| Working Example 2 | Composition | EVOH | M-PO | | EVA-B | 90 | 40 |
| | | | | | LUB-2 | 10.0 | |
| | Thickness (µm) | 4 | 1.5 | | 19 | | |
| Working Example 3 | Composition | EVOH | M-PO | | EVA-C | 90 | 40 |
| | | | | | LUB-2 | 10.0 | |
| | Thickness (µm) | 4 | 1.5 | | 19 | | |
| Working Example 4 | Composition | EVOH | M-PO | | IO-1 | 90 | 40 |
| | | | | | LUB-2 | 10.0 | |
| | Thickness (µm) | 4 | 1.5 | | 19 | | |
| Working Example 5 | Composition | EVOH | M-PO | | EEA-1 | 90 | 40 |
| | | | | | LUB-2 | 10.0 | |
| | Thickness (µm) | 4 | 1.5 | | 19 | | |
| Working Example 6 | Composition | EVOH | M-PO | | EMA | 90 | 40 |
| | | | | | LUB-2 | 10.0 | |
| | Thickness (µm) | 4 | 1.5 | | 19 | | |
| Working Example 7 | Composition | EVOH | M-PO | | EVA-A | 90 | 50 |
| | | | | | LUB-2 | 10.0 | |
| | Thickness (µm) | 8 | 1.5 | | 22 | | |
| Working Example 8 | Composition | EVOH | M-PO | | EVA-A | 90 | 70 |
| | | | | | LUB-2 | 10.0 | |
| | Thickness (µm) | 4 | 2 | | 39 | | |
| Working Example 9 | Composition | EVOH | M-PO | VL-1 | EVA-A | 90 | 40 |
| | | | | | LUB-2 | 10.0 | |
| | Thickness (µm) | 4 | 1.5 | 15 | 4 | | |
| Working Example 10 | Composition | EVOH | M-PO | | EAA | 90 | 40 |
| | | | | | LUB-2 | 10.0 | |
| | Thickness (µm) | 4 | 1.5 | | 19 | | |
| Working Example 11 | Composition | EVOH | M-PO | | EMAA | 90 | 40 |
| | | | | | LUB-2 | 10.0 | |
| | Thickness (µm) | 4 | 1.5 | | 19 | | |
| Comparative Example 1 | Composition | EVOH | M-PO | | VL-1 | 90 | 40 |
| | | | | | LUB-2 | 10.0 | |
| | Thickness (µm) | 4 | 1.5 | | 19 | | |
| Comparative Example 2 | Composition | EVOH | M-PO | - | EVA-D | 90 | 40 |
| | | | | | LUB-2 | 10.0 | |
| | Thickness (µm) | 4 | 1.5 | | | | |
| Comparative Example 3 | Composition | EVOH | M-PO | | EVA-E | 90 | 40 |
| | | | | | LUB-2 | 10.0 | |
| | Thickness (µm) | 4 | 1.5 | | 19 | | |
| Comparative Example 4 | Composition | EVOH | M-PO | - | EVA-F | 90 | 40 |
| | | | | | LUB-2 | 10.0 | |
| | Thickness (µm) | 4 | 1.5 | | 19 | | |
| Comparative Example 5 | Composition | PVDC | EEA-2 | EVA-D | IO-2 | 100 | 60 |
| | Thickness (µm) | 7 | 1.5 | 15 | 10 | | |
| Comparative Example 6 | Composition | EVOH | M-PO | - | VL-2 | 97 | 38 |
| | | | | | LUB-2 | 3.0 | |
| | Thickness (µm) | 5 | 1.5 | | 21 | | |

**[Table 2-I]**

| | Unit | Working Example 1 | Working Example 2 | Working Example 3 | Working Example 4 | Working Example 5 | Working Example 6 |
|---|---|---|---|---|---|---|---|
| Total thickness | µm | 40 | 40 | 40 | 40 | 40 | 40 |
| Inner surface layer resin | | EVA-A | EVA-B | EVA-C | IO-1 | EEA | EMA |
| | | VAc 12% | VAc 10% | VAc 7.5% | | EA 20% | MA 18% |
| Crystal enthalpy ratio of inner surface layer resin | % | 41.1 | 38.2 | 28.2 | 35.0 | 48.7 | 53.8 |
| Haze | % | 8 | 8 | 7 | 7 | 8 | 8 |
| Gloss MD/TD | % | 126/115 | 125/118 | 126/116 | 124/120 | 123/120 | 112/113 |
| Hot water shrinkage ratio (80°C) MD/TD | % | 29/32 | 28/31 | 25/27 | 28/32 | 29/33 | 29/33 |
| Oxygen permeability (23°C, 80% RH) | *1 | 23 | 23 | 22 | 23 | 23 | 23 |
| Moisture permeability (40°C, 90% RH) | *2 | 33 | 32 | 32 | 31 | 34 | 34 |
| Seal strength | N/15 mm | 28 | 29 | 31 | 25 | 28 | 27 |
| Film producibility | | A | A | A | A | A | A |
| Bag-forming processability | | A | A | A | A | A | A |
| Bag openability | | A | A | A | A | A | A |
| Self-weldability Adhesion force of inner surface | N/15 mm | 1.8 | 1.5 | 1.1 | 1.5 | 2.5 | 3.3 |
| Easy peelability Easy peelability determination | | A | A | A | A | A | A |

**[Table 2-II]**

| | Unit | Working Example 7 | Working Example 8 | Working Example 9 | Working Example 10 | Working Example 11 |
|---|---|---|---|---|---|---|
| Total thickness | µm | 50 | 70 | 40 | 40 | 40 |
| Inner surface layer resin | | EVA-A | EVA-A | EVA-A | EAA | EMAA |
| | | VAc 12% | VAc 12% | VAc 12% | AA 9.7% | MAA 12% |
| Crystal enthalpy ratio of inner surface layer resin | % | 41.1 | 41.1 | 41.1 | 27.2 | 35.1 |
| Haze | % | 9 | 11 | 7 | 8 | 8 |
| Gloss MD/TD | % | 127/126 | 119/117 | 126/118 | 121/120 | 124/123 |
| Hot water shrinkage ratio (80°C) MD/TD | % | 29/32 | 25/28 | 29/33 | 29/32 | 28/32 |
| Oxygen permeability (23°C, 80% RH) | *1 | 12 | 17 | 23 | 22 | 23 |
| Moisture permeability (40°C, 90% RH) | *2 | 30 | 23 | 33 | 32 | 31 |
| Seal strength | N/15 mm | 30 | 41 | 31 | 27 | 31 |
| Film producibility | | A | A | A | A | A |
| Bag-forming processability | | A | A | A | A | A |
| Bag openability | | A | A | A | A | A |
| Self-weldability Adhesion force of inner surface | N/15 mm | 1.8 | 2.0 | 1.7 | 0.9 | 1.6 |
| Easy peelability Easy peelability determination | | A | A | A | A | A |

| | | | | | | |
|---|---|---|---|---|---|---|
| ^{*} 1 Oxygen permeability Units: cm³/m²/24 h/atm ^{*}2 Moisture permeability Units: g/m²/24 h | | | | | | |

**[Table 3-I]**

| | Unit | Comparative Example 1 | Comparative Example 2 | Comparative Example 3 |
|---|---|---|---|---|
| Total thickness | µm | 40 | 40 | 40 |
| Inner surface layer resin | | VL-1 | EVA-D | EVA-E |
| | | | VAc 15% | VAc 18% |
| Crystal enthalpy ratio of inner surface layer resin | % | 18.6 | 56.6 | 61.4 |
| Haze | % | 8 | 7 | 8 |
| Gloss MD/TD | % | 122/121 | 110/109 | 105/106 |
| Hot water shrinkage ratio (80°C) MD/TD | % | 28/32 | 28/32 | 29/34 |
| Oxygen permeability (23°C, 80% RH) | *1 | 21 | 23 | 23 |
| Moisture permeability (40°C, 90% RH) | *2 | 20 | 28 | 30 |
| Seal strength | N/15m^{m} | 30 | 29 | 27 |
| Film producibility | | A | A | A |
| Bag-forming processability | | A | A | A |
| Bag openability | | A | A | A |
| Self-weldability Adhesion force of inner surface | N/15 mm | 0 | 14 | 28 |
| Easy peelability Easy peelability determination | | D | C | C |

**[Table 3-II]**

| | Unit | Comparative Example 4 | Comparative Example 5 | Comparative Example 6 |
|---|---|---|---|---|
| Total thickness | µm | 40 | 60 | 38 |
| Inner surface layer resin | | EVA-F | IO-2 | VL-2 |
| | | VAc 25% | | |
| Crystal enthalpy ratio of inner surface layer resin | % | 86.7 | 39.0 | 18.5 |
| Haze | % | - | 9 | 8 |
| Gloss MD/TD | % | - | 103/104 | 128/127 |
| Hot water shrinkage ratio (80°C) MD/TD | % | - | 49/50 | 17/19 |
| Oxygen permeability (23°C, 80% RH) | *1 | - | 25 | 21 |
| Moisture permeability (40°C, 90% RH) | *2 | - | 10 | 18 |
| Seal strength | N/15 | - | 25 | 29 |
| Film producibility | | C | A | A |
| Bag-forming processability | | - | A | A |
| Bag openability | | - | A | A |
| Self-weldability Adhesion force of inner surface | N/15 mm | - | 11 | 0 |
| Easy peelability Easy peelability determination | | - | D | D |

| | | | | |
|---|---|---|---|---|
| *1 Oxygen permeability Units: cm³/m²/24 h·atm *2 Moisture permeability Units: g/m²/24 h | | | | |

### Industrial Applicability

As is clear from the evaluation results shown in Tables 3 and 4, the present invention provides a polyamide-based heat-shrinkable multilayer film having optimal characteristics for applications that primarily require strength, which achieves a good balance of self-weldability and easy peelability demanded in packaging films for meat products such as fresh and processed meats. Additionally, the above heat-shrinkable multilayer film enables comprehensive improvements, such as providing the surface gloss and suitability for printing or label adhesion desired in packaging applications of meat products such as fresh meat or processed meat. The heat-shrinkable multilayer film further enables improvements such as the heat-shrinkability, strength, heat resistance, moldability, suitability for various types of packaging, gas barrier capability, moisture barrier capability, and rapid sealing suitability generally desired in films for food packaging.

## Claims

1. A heat-shrinkable multilayer film for being filled with contents, the film comprising:
an outer surface layer (A) comprising a heat-resistant thermoplastic resin;
an intermediate layer (B) comprising a polyamide-based resin; and
an inner surface layer (D) comprising an ethylene-based copolymer;
an adhesion strength between the inner surface layers after treatment with 80°C hot water being from 0.1 to 3.5 N/15 mm, when measured in a tensile tester with 20 mm distance between the chucks, 300 mm/min chuck speed, and 15 mm sample width at a temperature of 23°C and a humidity of 50% RH; **characterized in that**
the outer surface layer (A) comprises a polyester-based resin, the polyester-based resin being a copolymer polyester comprising a polycondensate of isophthalic acid and terephthalic acid with ethylene glycol,
and the inner surface layer (D) is an ethylene-vinyl acetate copolymer having a vinyl acetate content from 6 to 12 mass% and a melting point measured by differential scanning calorimeter in conformance with JIS K7121 of 90 to 100°C.

2. The heat-shrinkable multilayer film according to claim 1, wherein a gas barrier layer (C) comprising a resin and having gas barrier capability is inserted between the outer surface layer (A) and the inner surface layer (D)..

3. The heat-shrinkable multilayer film according to any one of claims 1 or 2, wherein the intermediate layer (B) comprises a resin composition of 60 to 95 mass% of polyamide 6 polymer or polyamide 6-66 copolymer, polyamide 6-12 copolymer or polyamide 6-66-12 copolymer, and 5 to 40 mass% of polyamide 6I-6T copolymer.

4. The heat-shrinkable multilayer film according to any one of claims 1 to 3, wherein the gas barrier layer (C) comprises an ethylene-vinyl alcohol copolymer.

5. The heat-shrinkable multilayer film according to any one of claims 1 to 4, wherein the ethylene-based copolymer that constitutes the inner surface layer (D) has a crystal melting enthalpy ratio at specified temperature 80°C measured by differential scanning calorimeter in conformance with JIS K7121 and determined by formula (1) of 20 to 55%; with
formula (1) being:
crystal melting enthalpy ratio (%) = (crystal melting enthalpy value at specified temperature (80°C) and below) / (entire crystal melting enthalpy value) x 100.

6. The heat-shrinkable multilayer film according to any one of claims 1 to 5, wherein the inner surface layer (D) is a sealing layer.

7. The heat-shrinkable multilayer film according to any one of claims 1 to 6, wherein the heat-shrinkable multilayer film is a tubular film, and the inner surface layer (D) is an innermost layer of the tubular film.

8. A method for producing a heat-shrinkable multilayer film described in any one of claims 1 to 7, the method comprising the steps of: co-extruding at least three types of melted thermoplastic resin in tubular form from a number of extruders corresponding to a number of types of laminated resin (at least three) that constitute the multilayer film, to form a tubular body having an outer surface layer (A) comprising a heat-resistant thermoplastic resin, an intermediate layer (B) comprising a polyamide-based resin, an intermediate gas barrier layer (C) comprising a gas barrier resin, and an inner surface layer (D) comprising an ethylene-based copolymer;
water-cooling the tubular body to not greater than a melting point of a primary resin contained in each of the layers;
reheating the tubular body using 75 to 90°C hot water;
stretching the tubular body 250% to 400% in a vertical direction and a circumferential direction while pulling the tubular body in the vertical direction while inserting fluid inside the tubular body, to form a biaxially stretched tubular film; and
performing relaxation heat treatment using 60 to 98°C steam or hot water from a side nearest the outer surface layer (A) of the biaxially stretched tubular body that has been reformed by inserting fluid inside of the folded film such that respective relaxation ratios in the vertical direction and the circumferential direction are from 2 to 25%.

9. A method for producing a packaged fresh meat product, the method comprising the steps of:
putting a meat product in a hollow cylindrical packaging bag, having a seal portion at one end and open edge at the other end, the packaging bag comprising the heat-shrinkable multilayer film described in any one of claims 1 to 7 while leaving an excess region near the open end;
forming a seal portion on the open edge while evacuating an interior of the bag, to perform vacuum packaging; and
causing hot water to act on the vacuum package, to heat-shrink the packaging bag and heat-adhesion (self-weld) the film inner layers that form the excess region with each other.

10. A packaged meat product formed by the method described in claim 9.

11. A method for removing a meat product from a packaged meat product, the method comprising the steps of:
after the packaged meat product described in claim 10 has been stored frozen, forming a notch in an excess region between the meat product filled region and the seal portion of the open end;
peeling the self-welded excess portion adjacent to the meat product; and
removing the meat product.

12. A packaging bag, comprising:
a heat-shrinkable multilayer film described in any one of claims 1 to 7,
the inner surface layer (D) being a sealing layer, and
the packaging bag being a hollow cylindrical packaging bag.

## Patentansprüche

1. Wärmeschrumpfbare Mehrschichtfolie zum Füllen mit Inhalt, wobei die Folie umfasst:
eine äußere Oberflächenschicht (A), die ein wärmebeständiges thermoplastisches Harz umfasst;
eine Zwischenschicht (B), die ein Harz auf Polyamidbasis umfasst; und
eine innere Oberflächenschicht (D), die ein Copolymer auf Ethylenbasis umfasst;
wobei eine Haftfestigkeit zwischen den inneren Oberflächenschichten bei Messung in einer Zugprüfmaschine mit 20 mm Abstand zwischen den Spannbacken, einer Spannbackengeschwindigkeit von 300 10 mm/min und einer Probenbreite von 15 mm bei einer Temperatur von 23 °C und einer relativen Luftfeuchtigkeit von 50 % RF nach der Behandlung mit 80 °C heißem Wasser 0,1 bis 3,5 N/15 mm beträgt; **dadurch gekennzeichnet, dass**
die äußere Oberflächenschicht (A) ein Harz auf Polyesterbasis umfasst, wobei das Harz auf Polyesterbasis ein Copolymer-Polyester ist, das ein Polykondensat von Isophthalsäure und Terephthalsäure mit Ethylenglycol umfasst,
und die innere Oberflächenschicht (D) ein Ethylen-Vinylacetat-Copolymer mit einem Vinylacetatgehalt von 6 bis 12 Masse-% und einem Schmelzpunkt von 90 bis 100 °C bei Messung mit einem dynamischen Differenzkalorimeter in Übereinstimmung mit JIS K7121 ist.

2. Wärmeschrumpfbare Mehrschichtfolie nach Anspruch 1, wobei eine Gasbarriereschicht (C), die ein Harz umfasst und eine Gasbarrierefähigkeit aufweist, zwischen der äußeren Oberflächenschicht (A) und der inneren Oberflächenschicht (D) eingesetzt ist.

3. Wärmeschrumpfbare Mehrschichtfolie nach einem der Ansprüche 1 oder 2, wobei die Zwischenschicht (B) eine Harzzusammensetzung mit 60 bis 95 Masse-% Polyamid-6-Polymer oder Polyamid-6-66-Copolymer, Polyamid-6-12-Copolymer oder Polyamid-6-66-12-Copolymer und 5 bis 40 Masse-% Polyamid-61-6T-Copolymer umfasst.

4. Wärmeschrumpfbare Mehrschichtfolie nach einem der Ansprüche 1 bis 3, wobei die Gasbarriereschicht (C) ein Ethylen-Vinylalkohol-Copolymer umfasst.

5. Wärmeschrumpfbare Mehrschichtfolie nach einem der Ansprüche 1 bis 4, wobei das Copolymer auf Ethylenbasis, das die innere Oberflächenschicht (D) bildet, ein Kristallschmelzenthalpieverhältnis bei einer festgelegten Temperatur von 80 °C von 20 bis 55 % bei Messung mit einem dynamischen Differenzkalorimeter in Übereinstimmung mit JIS K7121 und bestimmt durch Formel (1) aufweist; wobei
Formel (1) wie folgt ist:
Kristallschmelzenthalpieverhältnis (%) = (Kristallschmelzenthalpiewert bei festgelegter Temperatur (80 °C) und darunter) /(Kristallschmelzenthalpiegesamtwert) x 100.

6. Wärmeschrumpfbare Mehrschichtfolie nach einem der Ansprüche 1 bis 5, wobei die innere Oberflächenschicht (D) eine Versiegelungsschicht ist.

7. Wärmeschrumpfbare Mehrschichtfolie nach einem der Ansprüche 1 bis 6, wobei die wärmeschrumpfbare Mehrschichtfolie eine schlauchförmige Folie ist und die innere Oberflächenschicht (D) eine innerste Schicht der schlauchförmigen Folie ist.

8. Verfahren zur Herstellung einer wärmeschrumpfbaren Mehrschichtfolie nach einem der Ansprüche 1 bis 7, wobei das Verfahren folgende Schritte umfasst: Koextrudieren von mindestens drei Arten von geschmolzenem thermoplastischem Harz in Schlauchform aus einer Anzahl von Extrudern, die einer Anzahl von Arten von laminiertem Harz (mindestens drei) entspricht, die die Mehrschichtfolie bilden, um einen schlauchförmigen Körper mit einer äußeren Oberflächenschicht (A), die ein wärmebeständiges thermoplastisches Harz umfasst, einer Zwischenschicht (B), die ein Harz auf Polyamidbasis umfasst, einer Gasbarrierezwischenschicht (C), die ein Gasbarriereharz umfasst, und einer inneren Oberflächenschicht (D), die ein Copolymer auf Ethylenbasis umfasst, zu bilden;
Wasserkühlen des schlauchförmigen Körpers auf nicht mehr als einen Schmelzpunkt eines primären Harzes, das in jeder der Schichten enthalten ist;
erneutes Erwärmen des schlauchförmigen Körpers unter Verwendung von 75 bis 90 °C heißem Wasser;
Strecken des schlauchförmigen Körpers um 250 % bis 400 % in einer vertikalen Richtung und einer Umfangsrichtung unter ziehen des schlauchförmigen Körpers in vertikaler Richtung, während Fluid in den schlauchförmigen Körper eingebracht wird, um eine biaxial gestreckte schlauchförmige Folie zu bilden; und
Durchführen einer Relaxationswärmebehandlung unter Verwendung von 60 bis 98 °C heißem Dampf oder heißem Wasser von einer Seite, die der äußeren Oberflächenschicht (A) des biaxial gestreckten schlauchförmigen Körpers am nächsten ist, der durch Einbringen von Fluid in die gefaltete Folie derart umgeformt wurde, dass jeweilige Relaxationsverhältnisse in der vertikalen Richtung und in der Umfangsrichtung 2 bis 25 % betragen.

9. Verfahren zur Herstellung eines verpackten Frischfleischprodukts, wobei das Verfahren folgende Schritte umfasst:
Einlegen eines Fleischprodukts in einen hohlzylindrischen Verpackungsbeutel mit einem Versiegelungsabschnitt an einem Ende und einer offenen Kante an dem anderen Ende, wobei der Verpackungsbeutel die wärmeschrumpfbare Mehrschichtfolie nach einem der Ansprüche 1 bis 7 umfasst, unter Belassen eines Überstandsbereichs nahe dem offenen Ende;
Bilden eines Versiegelungsabschnitts an der offenen Kante unter Evakuieren eines Beutelinneren, um ein Vakuumverpacken durchzuführen; und
Einwirkenlassen von heißem Wasser auf die Vakuumverpackung, um den Verpackungsbeutel wärmezuschrumpfen und die inneren Folienschichten, die den überschüssigen Bereich bilden, heißzuschmelzen (miteinander zu verschweißen).

10. Verpacktes Fleischprodukt, das durch das Verfahren nach Anspruch 9 gebildet ist.

11. Verfahren zum Entfernen eines Fleischprodukts aus einem verpackten Fleischprodukt, wobei das Verfahren folgende Schritte umfasst:
nach dem Tiefkühleinlagern des verpackten Fleischprodukts nach Anspruch 10 Bilden einer Kerbe in einem Überstandsbereich zwischen dem mit Fleischprodukt gefüllten Bereich und dem Versiegelungsabschnitt des offenen Endes;
Abziehen des verschweißten Überstandsabschnitts benachbart zu dem Fleischprodukt; und
Entfernen des Fleischprodukts.

12. Verpackungsbeutel, umfassend:
eine wärmeschrumpfbare Mehrschichtfolie nach einem der Ansprüche 1 bis 7,
wobei die innere Oberflächenschicht (D) eine Versiegelungsschicht ist, und
der Verpackungsbeutel ein hohlzylindrischer Verpackungsbeutel ist.

## Revendications

1. Film multicouche thermorétractable destiné à être rempli de contenus, le film comprenant :
une couche superficielle externe (A) comprenant une résine thermoplastique thermorésistante ;
une couche intermédiaire (B) comprenant une résine à base de polyamide ; et
une couche superficielle interne (D) comprenant un copolymère à base d'éthylène ;
une force d'adhésion entre les couches superficielles internes après traitement avec de l'eau chaude à 80 °C de 0,1 à 3,5 N/15 mm, lorsqu'on mesure dans un testeur de traction avec une distance de 20 mm entre les mandrins, une vitesse de mandrin de 300 mm/min et une largeur d'échantillon de 15 mm à une température de 23 °C et une humidité de 50 % HR ; **caractérisé en ce que**
la couche superficielle externe (A) comprend une résine à base de polyester, la résine à base de polyester étant un polyester copolymère comprenant un polycondensat d'acide isophtalique et d'acide téréphtalique avec de l'éthylène glycol,
et la couche superficielle interne (D) est un copolymère d'éthylène-acétate vinyle ayant une teneur en acétate de vinyle allant de 6 à 12 % en masse et un point de fusion mesuré par un calorimètre différentiel à balayage conformément à JIS K7121 de 90 à 100 °C.

2. Film multicouche thermorétractable selon la revendication 1, dans lequel une couche de barrière au gaz (C) comprenant une résine et ayant une capacité de barrière aux gaz est insérée entre la couche superficielle externe (A) et la couche superficielle interne (D).

3. Film multicouche thermorétractable selon l'une quelconque des revendications 1 ou 2, dans lequel la couche intermédiaire (B) comprend une composition de résine de 60 à 95 % en masse de polymère de polyamide 6 ou de copolymère de polyamide 6-66, de copolymère de polyamide 6-12 ou de copolymère de polyamide 6-66-12 et 5 à 40 % en masse de copolymère de polyamide 6I-6T.

4. Film multicouche thermorétractable selon l'une quelconque des revendications 1 à 3, dans lequel la couche de barrière au gaz (C) comprend un copolymère d'éthylène-alcool vinylique.

5. Film multicouche thermorétractable selon l'une quelconque des revendications 1 à 4, dans lequel le copolymère à base d'éthylène qui constitue la couche superficielle interne (D) a un rapport d'enthalpie de fusion de cristal à une température spécifiée de 80 °C mesuré par un calorimètre différentiel à balayage conformément à JIS K7121 et déterminé par la formule (1) de 20 à 55 % ; avec
la formule (1) étant :
rapport d'enthalpie de fusion de cristal (%) = (valeur d'enthalpie de fusion de cristal à la température spécifiée (80 °C) et en dessous) / (valeur d'enthalpie de fusion de cristal entière) x 100.

6. Film multicouche thermorétractable selon l'une quelconque des revendications 1 à 5, dans lequel la couche superficielle interne (D) est une couche d'étanchéité.

7. Film multicouche thermorétractable selon l'une quelconque des revendications 1 à 6, dans lequel le film multicouche thermorétractable est un film tubulaire, et la couche superficielle interne (D) est une couche la plus interne du film tubulaire.

8. Procédé de production d'un film multicouche thermorétractable décrit dans l'une quelconque des revendications 1 à 7, le procédé comprenant les étapes consistant à : coextruder au moins trois types de résine thermoplastique fondue sous forme tubulaire à partir d'un nombre d'extrudeuses correspondant à un nombre de types de résine stratifiée (au moins trois) qui constituent le film multicouche, pour former un corps tubulaire ayant une couche superficielle externe (A) comprenant une résine thermoplastique thermorésistante, une couche intermédiaire (B) comprenant une résine à base de polyamide, une couche de barrière au gaz intermédiaire (C) comprenant une résine de barrière au gaz et une couche superficielle interne (D) comprenant un copolymère à base d'éthylène ;
refroidir à l'eau le corps tubulaire à une température ne dépassant pas un point de fusion d'une résine primaire contenue dans chacune des couches ;
réchauffer le corps tubulaire en utilisant de l'eau chaude à 75 à 90 °C ; étirer le corps tubulaire à 250 % à 400 % dans une direction verticale et une direction circonférentielle tout en tirant le corps tubulaire dans la direction verticale tout en insérant du fluide à l'intérieur du corps tubulaire, pour former un film tubulaire étiré biaxialement ; et
mettre en œuvre un traitement thermique de relaxation en utilisant de la vapeur ou de l'eau chaude à 60 à 98 °C à partir d'un côté le plus proche de la couche superficielle externe (A) du corps tubulaire étiré biaxialement qui a été reformé en insérant un fluide à l'intérieur du film plié de telle sorte que des rapports de relaxation respectifs dans la direction verticale et la direction circonférentielle vont de 2 à 25 %.

9. Procédé de production d'un produit de viande frais conditionné, le procédé comprenant les étapes consistant à :
placer un produit de viande dans un sachet de conditionnement cylindrique creux, ayant une partie de joint au niveau d'une extrémité et un bord ouvert au niveau de l'autre extrémité, le sachet de conditionnement comprenant le film multicouche thermorétractable décrit dans l'une quelconque des revendications 1 à 7 tout en laissant une région en excès près de l'extrémité ouverte ;
former une partie de joint sur le bord ouvert tout en faisant le vide d'un intérieur du sachet, pour mettre en œuvre un conditionnement sous vide ; et
amener de l'eau chaude à agir sur le conditionnement sous vide, pour rétracter thermiquement le sachet de conditionnement et thermosceller (souder sur elles-mêmes) les couches internes de film qui forment la région en excès les unes aux autres.

10. Produit de viande conditionné formé par le procédé décrit dans la revendication 9.

11. Procédé de retrait d'un produit de viande hors d'un produit de viande conditionné, le procédé comprenant les étapes consistant à :
après que le produit de viande conditionné décrit dans la revendication 10 a été stocké congelé, former une encoche dans une région en excès entre la région remplie de produit de viande et la partie d'étanchéité de l'extrémité ouverte ;
détacher la partie en excès soudée sur elle-même adjacente au produit de viande ; et
retirer le produit de viande.

12. Sachet d'emballage, comprenant :
un film multicouche thermorétractable décrit dans l'une quelconque des revendications 1 à 7,
la couche superficielle interne (D) étant une couche d'étanchéité, et
le sachet d'emballage étant un sachet d'emballage cylindrique creux.
